# EUROPÄISCHE PATENTANMELDUNG

(11) **EP 4 701 165 A1**
(43) Veröffentlichungstag der Anmeldung: **25.02.2026**
(21) Anmeldenummer: 25194539.0
(22) Anmeldetag: 07.08.2025
(51) Int. Cl.: H04L 69/40, H04L 69/14, H04W 4/50, H04W 4/46, H04W 4/48, H04W 4/80

(54) **VERFAHREN ZUM WEITERFÜHREN EINER ÜBER EINE UNMITTELBARE VERBINDUNG AUSGEFÜHRTEN SPRECHVERBINDUNG ÜBER EIN HINTERGRUNDSYSTEM BEI UNTERBRECHUNG DIESER UNMITTELBAREN VERBINDUNG SOWIE KOMMUNIKATIONSEINHEIT, HINTERGRUNDSYSTEM UND KRAFTFAHRZEUG**

(30) Priorität: 22.08.2024 DE 102024208031
(71) Anmelder: AUMOVIO Germany GmbH, 60488 Frankfurt am Main (DE)
(72) Erfinder: Meitzner, Michael Rolf, 30175 Hannover (DE); Bitzer, Stefan, 30175 Hannover (DE)
(74) Vertreter: Aumovio Corporation

(57) **Zusammenfassung**

Die Erfindung betrifft ein Verfahren zum Weiterführen einer über eine unmittelbare Verbindung (10) ausgeführten Sprechverbindung bei Unterbrechung dieser unmittelbaren Verbindung (10) zwischen zwei mit einem jeweiligen Kraftfahrzeug verbundenen Kommunikationseinheiten (12a, 12b). Die zwei Kommunikationseinheiten (12a, 12b) sind in dem jeweiligen Kraftfahrzeug jeweils mit zumindest einer kraftfahrzeugnutzerzugeordneten Kommunikationsgarnitur (16a, 16b) zu jeweils einem lokalen Netzwerk verbunden. Die Sprechverbindung zwischen den Kommunikationsgarnituren (16a, 16b) wird mittels der Kommunikationseinheiten (12a, 12b) über deren unmittelbare Verbindung netzwerkübergreifend ausgeführt. So wird nach Unterbrechung der unmittelbaren Verbindung (10) eine über ein Hintergrundsystem (20) verlaufende netzwerkübergreifende Ersatzverbindung (22) zwischen den zwei lokalen Netzwerken aufgebaut, um die Sprechverbindung weiterzuführen.

## Beschreibung

Zu der Erfindung gehört ein Verfahren zum Weiterführen einer über eine unmittelbare Verbindung ausgeführten Sprechverbindung bei Unterbrechung dieser unmittelbaren Verbindung zwischen zwei mit einem jeweiligen Kraftfahrzeug verbundenen Kommunikationseinheiten. Die Erfindung betrifft zudem eine Kommunikationseinheit, die dazu eingerichtet ist, an einem solchen Verfahren teilzunehmen. Zudem betrifft die Erfindung ein Hintergrundsystem, das dazu eingerichtet, anonymisierte Kennungen zu erfindungsgemäßen Kommunikationseinheiten mit zugeordneten Verbindungsinformationen zum Aufbau einer über das Hintergrundsystem verlaufenden Ersatzverbindung zu verwalten. Weiterhin umfasst die Erfindung ein Kraftfahrzeug mit einer solchen erfindungsgemäßen Kommunikationseinheit.

Eine Kommunikation zwischen Nutzern eines Kraftfahrzeugs und/oder erst recht zwischen Nutzern auf oder in unterschiedlichen Kraftfahrzeugen ist während des Fahrbetriebs aufgrund von Hintergrundgeräuschen, beispielsweise durch eine das Kraftfahrzeug umströmende Luft und/oder einem Motorengeräusch, mindestens sehr erschwert. Dies betrifft insbesondere offene Kraftfahrzeuge, wie beispielsweise ein Motorrad und/oder ein Quad, um nur zwei Beispiele zu nennen, bei denen die Nutzer während des Fahrbetriebs nicht zu allen Seiten von einer Karosserie umschlossen sind, die solche Hintergrundgeräusche zumindest teilweise abdämpft.

Daher verwenden deren Kraftfahrzeugnutzer Kommunikationsgarnituren, um während des Fahrbetriebs miteinander zu kommunizieren. Eine solche Kommunikationsgarnitur umfasst dabei zumindest ein Mikrofon zur Aufnahme von Audiosignalen und einen Ohrhörer oder einen Kopfhörer zur Ausgabe von Audiosignalen. Die Kommunikationsgarnitur kann in oder an dem Kraftfahrzeug, beispielsweise auch an Kleidung oder Ausrüstung des Kraftfahrzeugnutzers, insbesondere am oder im Helm der Kraftfahrzeugnutzer, angebracht sein.

So können Kommunikationsgarnituren bisweilen unmittelbar miteinander zu einem fahrzeugübergreifend vermaschten Netzwerk, auch genannt Mesh-Netzwerk, verbunden werden, wie es beispielsweise von der Produktreihe des Unternehmens Sena^{®} bekannt ist. In einem solchen vermaschten Netzwerk sind üblicherweise alle Kommunikationsgarnituren gleichberechtigte Sender und Empfänger von Audiosignalen. Beispielsweise bietet Bluetooth eine Mesh-Betriebsart, die mehrere Bluetooth-Geräte zu einem vermaschten Funknetzwerk zusammenschließt, beziehungsweise verbindet. Das Verwenden einer solchen Mesh-Technologie zur Kommunikation zwischen Kraftfahrzeugnutzern hat jedoch den Nachteil, dass falls Kraftfahrzeugnutzer sich über die maximale Reichweite der das Mesh-Netzwerk aufbauenden Technologie voneinander entfernen, eine Sprechverbindung mit dem Kraftfahrzeugnutzer ausfällt, und es möglicherweise zu Störgeräuschen kommt.

Auch ist es üblich, Kommunikationsgarnituren teils noch mit einem Mobilfunktelefon als Sende- und/oder Empfangseinheit für Telefonate zu verbinden, damit Kraftfahrzeugnutzer hierüber während des Fahrbetriebs über ihrer Kommunikationsgarnitur auch ein Telefonat führen können. Ein Telefonat unter mehreren mit jeweils einer solchen Kommunikationsgarnitur ausgestatteten Kraftfahrzeugnutzern erfordert dabei ein Weiterleiten des Telefonats von einem zum anderen Mobilfunktelefon. Problematisch ist dabei, dass falls eine Verbindung zwischen lediglich zwei der mehreren Kraftfahrzeugnutzern unterbrochen wird, beispielsweise, weil eine Entfernung zwischen den Nutzern zu groß ist, so führt dies meist auch unweigerlich zu einer Beeinträchtigung oder sogar Unterbrechung des Gesprächs zwischen den anderen Nutzern.

Die Kommunikationsgarnituren werden folglich für eine Kommunikation, insbesondere für eine kraftfahrzeugübergreifende Kommunikation, unmittelbar unter Verwendung von einerseits Bluetooth oder CB-Funk (CB steht für "citizens band"), oder andererseits über ein den jeweiligen Kommunikationsgarnituren individuell zugeordnetes Mobilfunktelefon verbunden. Ist der Abstand zwischen den Kraftfahrzeugen größer als die maximale Reichweite der verwendeten Technologie, so reißt die Verbindung ab.

Die WO 2023 130 105 A1 offenbart ein Hörgerät, umfassend ein Mikrofon, das so konfiguriert ist, dass es ein Mikrofon-Ausgangssignal erzeugt, das von dem Mikrofon übertragene Töne repräsentiert.

Die US 9 712 662 B2 betrifft ein Verfahren zur Erweiterung eines Interkom-Kommunikationsbereichs, wobei während eines Kopplungsprozesses zwischen Headset-Kommunikationsvorrichtung zellularbezogene Parameter, die vorab in einem Speichermodul jeder Headset-Kommunikationsvorrichtung zu speichern sind, bereitgestellt werden.

Die KR 101 998 152 B1 beschreibt ein Bluetooth-Intercom-Voice-Hub mit Bluetooth-Modulen, die jeweils mit einem Intercom-Modul verbunden sind, wobei zumindest eines der Bluetooth-Module mit einem Bluetooth-Headset verbunden ist. So überträgt das mindestens eine Bluetooth-Modul eine von dem angeschlossenen Bluetooth-Headset empfangene Stimme an das Intercom-Modul.

Der vorliegenden Erfindung liegt die Aufgabe zugrunde, ein Verfahren bereitzustellen, womit eine zuverlässige kraftfahrzeugübergreifende Kommunikation während des Fahrbetriebs möglich ist.

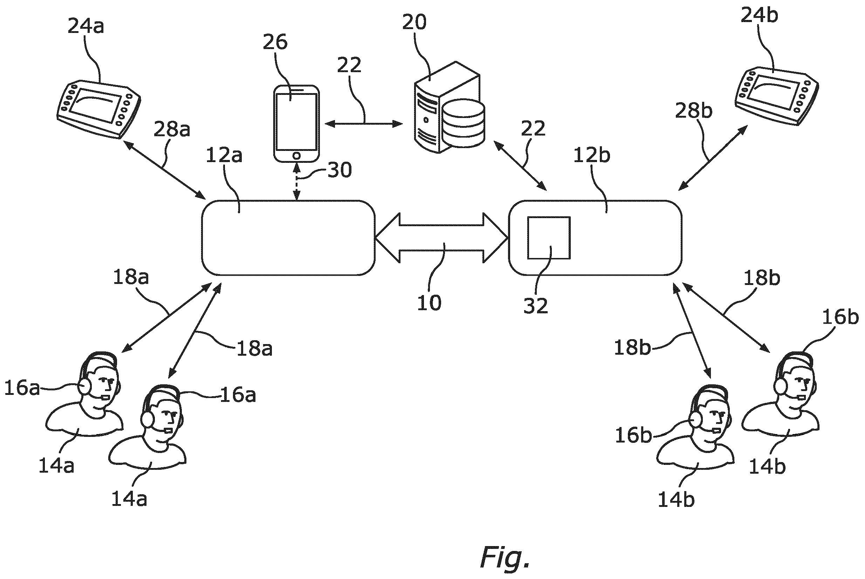

Die Aufgabe wird durch die Gegenstände der unabhängigen Patentansprüche gelöst. Vorteilhafte Weiterentwicklungen der Erfindung sind durch die abhängigen Patentansprüche, die folgende Beschreibung sowie die Figur beschrieben.

Die Erfindung betrifft ein Verfahren zum Weiterführen einer über eine unmittelbare Verbindung ausgeführten Sprechverbindung bei Unterbrechung dieser unmittelbaren Verbindung zwischen zwei mit einem jeweiligen Kraftfahrzeug verbundenen Kommunikationseinheiten. Die zwei Kommunikationseinheiten in dem jeweiligen Kraftfahrzeug sind hierbei jeweils mit zumindest einer kraftfahrzeugnutzerzugeordneten Kommunikationsgarnitur zu jeweils einem lokalen Netzwerk verbunden. Oder anders ausgedrückt, eine Kommunikationseinheit spannt mit den mit ihr unmittelbar verbundenen einen oder mehreren Kommunikationsgarnituren ein "lokales Netzwerk" auf. Gemäß einem Kommunikationsprotokoll wird nach Unterbrechung der unmittelbaren Verbindung eine über ein Hintergrundsystem verlaufende netzwerkübergreifende Ersatzverbindung zwischen den zwei lokalen Netzwerken aufgebaut, um die Sprechverbindung weiterzuführen.

Das Verfahren umfasst dabei folgende Verfahrensschritte:
So werden zunächst anonymisierte Kennungen zu jeder der zwei Kommunikationseinheiten in dem Hintergrundsystem mit zugeordneter Verbindungsinformation hinterlegt. In einem darauffolgenden Schritt wird die Unterbrechung der unmittelbaren Verbindung seitens einer der zwei die unmittelbare Verbindung ausbildenden Kommunikationseinheiten erkannt. Sodann sendet die die Unterbrechung erkennende Kommunikationseinheit an das Hintergrundsystem dessen anonymisierte Kennung. Daraufhin wird eine netzwerkübergreifende, über das Hintergrundsystem verlaufende Ersatzverbindung zwischen den zwei die zuvor unmittelbare Verbindung ausbildenden Kommunikationseinheiten anhand der hinterlegten anonymisierten Kennungen und/oder der hinterlegten Verbindungsinformation aufgebaut. Schließlich wird die netzwerkübergreifende Sprechverbindung über die netzwerkübergreifende Ersatzverbindung weitergeführt.

In anderen Worten ist das Hintergrundsystem dazu eingerichtet, anonymisierte Kennungen von Kommunikationseinheiten mit zugeordneten Verbindungsinformationen für Sprechverbindungen zu verwalten. Wird eine netzwerkübergreifende Sprechverbindung, die eine unmittelbare Verbindung zwischen zwei jeweils ein lokales Netzwerk aufspannenden Kommunikationseinheiten nutzt, aufgebaut, so werden die anonymisierten Kennungen der zwei Kommunikationseinheiten mit den zugeordneten Verbindungsinformationen an das Hintergrundsystem übermittelt. Empfängt das Hintergrundsystem, während die Sprechverbindung ausgeführt wird, von einer dieser zwei Kommunikationseinheiten dessen anonymisierte Kennung, so prüft es, ob eine Verbindungsinformation betreffend die anonymisierte Kennung vorliegt. Falls dem so ist, erfolgt ein Aufbau einer über das Hintergrundsystem verlaufende netzwerkübergreifende Ersatzverbindung, um die Sprechverbindung über diese Ersatzverbindung weiterzuführen.

Eine solche Kommunikationseinheit kann beispielsweise als Gerät ausgebildet sein, das mehrere Schnittstellen zum Verbinden von Kommunikationsgarnituren aufweist. Die Kommunikationseinheit kann ein oder mehrere Module aufweisen, die zum Beispiel als Schnittstellen genutzt werden können, damit Kommunikationsgarnituren und/oder weitere Kommunikationseinheiten mit der Kommunikationseinheit verbunden werden können. Solche Module können beispielsweise Bluetooth- und/oder ein WLAN-Module sein. Die Kommunikationseinheit kann eine Software, insbesondere eine Firmware, zum Betreiben der Kommunikationseinheit aufweisen. Die Software kann beispielsweise eingehende Audiosignale verarbeiten und/oder weiterleiten.

Die Kommunikationseinheit kann zu dessen Betrieb ein Kommunikationsprotokoll nutzen. Das Kommunikationsprotokoll kann beispielsweise zu dessen Software gehören. Dieses Kommunikationsprotokoll kann beispielsweise anhand von Abläufen und/oder Regeln festlegen, inwiefern Audiosignale zwischen zwei oder mehreren Kommunikationsgarnituren und/oder Kommunikationseinheiten ausgetauscht werden. Das Kommunikationsprotokoll kann zumindest teilweise beispielsweise auf Grundlage eines Bluetooth- und oder Wi-Fi-Standard (IEEE 802.11) ausgebildet sein und/oder durch zumindest eine Software implementiert sein, die solche Standards umsetzt. Beide Standards ermöglichen eine drahtlose Übertragung von Daten, einschließlich Daten zu Audiosignalen. Bluetooth kann beispielsweise bei Übertragungen von Daten über Distanzen bis zu 10 Meter (Bluetooth-Klasse 2) oder 100 m (Bluetooth-Klasse 1) verwendet werden. Wi-Fi kann je nach verwendetem Standard, wie beispielsweise 802.11b, 802.11g, 802.11n, 802.11ac und/oder 802.11ax, Daten bis 500 m übertragen.

Die Sprechverbindung kann insbesondere zwischen miteinander verbundenen Kommunikationsgarnituren aufgebaut werden. Über die Sprechverbindung können von den Kommunikationsgarnituren erfasste Audiosignale ausgetauscht werden. Die Kraftfahrzeugnutzer, die diese Kommunikationsgarnituren nutzen, sind insofern Teilnehmer der Sprechverbindung. Die Sprechverbindung zwischen Kommunikationsgarnituren kann teilweise durch einen Audiokanal vorgegeben sein. Der Audiokanal kann beispielsweise ein Frequenzband, in dem diese Audiosignale übertragen werden, und/oder die Teilnehmer der Sprechverbindung umfassen. Die Verbindung als solche betrifft lediglich die Erreichbarkeit oder "Sichtbarkeit" beispielsweise in dem lokalen Netzwerk und/oder netzwerkübergreifend. Die Audiosignale der Sprechverbindung können über die Verbindung übertragen werden. Die Kontaktierbarkeit, insbesondere der Kommunikationsgarnitur, zum Aufbau und/oder im Rahmen der Sprechverbindung kann mittels einer ID oder Netzwerkadresse der Verbindung erfolgen.

Die Sprechverbindung kann beispielsweise durch nutzerseitige Auswahl eines Audiokanals erfolgen, anhand dessen festgelegt ist, welche
Kommunikationsgarnituren miteinander Audiosignale austauschen. Diese Auswahl kann beispielsweise durch eine kraftfahrzeugnutzerseitige Eingabe erfolgen. Die Kommunikationseinheit kann hierzu ein Bedienfeld aufweisen und/oder an ein Bedieninstrument des Kraftfahrzeugs angeschlossen sein, über das eine kraftfahrzeugnutzerseitige Eingabe, beispielswiese über ein Touchpad, Knöpfe und/oder akustisch, erfolgen kann. Der Aufbau der Sprechverbindung und/oder auch die anschließende Übertragung von Audiosignalen über diese Sprechverbindung kann gemäß dem Kommunikationsprotokoll erfolgen.

Insofern können vorteilhafterweise Sprechverbindungen zwischen allen oder einzelnen jeweils mit einer Kommunikationsgarnitur ausgestatteten Kraftfahrzeugnutzern je nach Auswahl stattfinden. Die Kommunikationseinheit kann bedarfs- und/oder produktabhängig individualisierte Softwarekomponenten aufweisen, in denen insbesondere auch Kommunikationsstandards umgesetzt sind. So kann das Kommunikationsprotokoll auch eine gleichzeitige Durchführung mehrerer Sprechverbindungen, insbesondere teilweise sogar netzwerkübergreifender Sprechverbindungen, ermöglichen.

Die Sprechverbindung kann über die Verbindung ausgeführt werden, die zwei lokale durch jeweils eine Kommunikationseinheit aufgespannte Netzwerke unmittelbar verbindet. Die zwei Kommunikationseinheiten können beim Aufbau der Sprechverbindung ihre jeweiligen anonymisierten Kennungen mit zugeordneter Verbindungsinformation an das Hintergrundsystem übermitteln.

Das Hintergrundsystem kann durch einen Server, beispielsweise angeordnet in einem Rechenzentrum, gegeben sein. Das Hintergrundsystem kann Empfangseinheiten und/oder Sendeinheiten umfassen, um beispielsweise Befehle gemäß dem Kommunikationsprotokoll und/oder Audiosignale zu empfangen und zu senden. Das Hintergrundsystem kann beispielsweise eine oder mehrere Mobilfunkeinheiten als Empfangseinheiten und/oder Sendeinheiten aufweisen. Das Hintergrundsystem kann Speichereinheiten und/oder eine Datenbank aufweisen, insbesondere um die anonymen Kennungen und Verbindungsinformationen zu archivieren und/oder zu verwalten.

Die Kommunikationseinheiten können zum Beispiel ebenso eine oder mehrere Mobilfunkeinheiten aufweisen. Denkbar ist auch, dass sich die Kommunikationseinheiten teilweise mit einem mobilfunkfähigen Endgerät verbinden und dessen Mobilfunkeinheit zur Kommunikation nutzen.

So können das Hintergrundsystem und die Kommunikationseinheiten mittels zumindest einer ihrer jeweiligen Mobilfunkeinheiten mit dem Internet verbunden sein. Den zwei Kommunikationseinheiten und dem Hintergrundsystem können insofern jeweils Netzwerk-IP-Adressen zugeordnet sein, worüber diese untereinander kontaktierbar sind, insofern auch Verbindungsanfragen, Rückmeldung zu solchen Anfragen, anonymisierte Kennungen und/oder Verbindungsinformationen, insbesondere auch während der Unterbrechung der unmittelbaren Verbindung, austauschen können.

Alternativ oder ergänzend können das Hintergrundsystem und die Kommunikationseinheiten miteinander über Mobilfunkkanäle kommunizieren, beispielsweise indem sie ihnen jeweils zugeordnete Mobilfunknummern nutzen. Insofern können auch hierüber Verbindungsanfragen, Rückmeldung zu solchen Anfragen, anonymisierte Kennungen und/oder Verbindungsinformationen während der Unterbrechung der unmittelbaren Verbindung zwischen dem Hintergrundsystem und den Kommunikationseinheiten ausgetauscht werden. So kann das Hintergrundsystem dessen eigene Netzwerk-IP-Adresse und/oder dessen eigene Mobilfunknummer, beispielsweise durch einen Broadcast, bereits vorab zum Aufbau der Sprechverbindung an die Kommunikationseinheiten übermitteln. Die Kommunikationseinheiten können die Netzwerk-IP-Adresse und/oder die Mobilfunknummer des Hintergrundsystems beispielsweise nach deren Empfang jeweils in einen internen Speicher hinterlegen. Denkbar ist auch, dass die Kommunikationseinheiten im Rahmen der Fertigung die Netzwerk-IP-Adresse und/oder die Mobilfunknummer des Hintergrundsystems in einen internen Speicher als Kommunikationsparameter erhalten haben. Die Kommunikationseinheiten können insofern das Hintergrundsystem anhand dessen Netzwerk-IP-Adresse und/oder dessen Mobilfunknummer kontaktieren, so zum Beispiel, um beim Aufbau der Sprechverbindung die Verbindungsinformation und/oder eine oder mehrere anonymisierte Kennungen an das Hintergrundsystem zu übermitteln.

Das Hintergrundsystem wiederum kann zum Beispiel anhand der Verbindungsinformation eine Zuordnung mitgeteilt bekommen haben, aus der hervorgeht, welche anonymisierte Kennung einer Netzwerk-IP-Adresse und/oder eine Mobilfunknummer zuzuordnen ist. So kann das Hintergrundsystem die den anonymisierten Kennungen zugeordneten Kommunikationseinheiten durch Heranziehen der Verbindungsinformation und der hierin hinterlegten Netzwerk-IP-Adressen und/oder Mobilfunknummern kontaktieren. Die Verbindungsinformation kann alternativ oder ergänzend beispielsweise Zeitpunkt des Verbindungsaufbaus der Sprechverbindung und/oder Informationen zu einem Audiokanal betreffend die Sprechverbindung umfassen.

Die anonymisierte Kennung kann ein Identifikationsmerkmal sein, das so gestaltet ist, dass es keine Rückschlüsse auf eine Identität der das Identifikationsmerkmal erstellenden und/oder nutzenden Kommunikationseinheit zulässt. Die anonymisierte Kennung kann dabei beispielsweise nur für die erstellenden und/oder nutzenden Einheit selbst erkennbar sein. So kann die Kommunikationseinheit mit der Aussendung der anonymisierten Kennung diese für einen späteren Vergleich in einem internen Speicher aufbewahren. Die anonymisierte Kennung kann ein Hash-Wert oder eine zufällig generierte ID sein. Die Kommunikationseinheit kann zum Beispiel mit Beendigung der Sprechverbindung die in dem Hintergrundsystem hinterlegte anonymisierte Kennung aus dem internen Speicher dann auch wieder entfernen. Die Kommunikationseinheit kann zum Beispiel ihre anonymisierte Kennung durch Anwenden einer mathematischen Funktion auf eine der Kommunikationseinheit zugeordneten Referenznummer erzeugen, wie beispielsweise durch Bilden einer Quersumme oder Hash-Werts von einer Seriennummer der Kommunikationseinheit. In diesem Fall kann die Kommunikationseinheit für den späteren Vergleich dessen anonymisierten Kennung durch das Anwenden der mathematischen Funktion auf dessen Referenznummer erneut erzeugen, um die Kennung wiederzuerkennen. Die Kennung kann beispielsweise insofern anonymisiert sein, als dass nur das Hintergrundsystem und/oder die Kommunikationseinheiten die Kennung der erstellenden und/oder nutzenden Kommunikationseinheit zuordnen können.

Spricht beispielsweise einer der Kraftfahrzeugnutzer in seine Kommunikationsgarnitur ein Audiosignal ein, so kann dieses Audiosignal an andere an der Sprechverbindung teilnehmenden Kommunikationsgarnituren übertragen werden. Das Kommunikationsprotokoll kann beispielsweise das Weiterleiten des erfassten Audiosignals steuern. Das durch eine Kommunikationsgarnitur erfasste Audiosignal kann von der Kommunikationseinheit an eine andere Kommunikationseinheit weitergeleitet werden. Wird das Audiosignal direkt von der einen Kommunikationseinheit an die andere Kommunikationseinheit übermittelt, ohne dass das Audiosignal dabei zum Beispiel eine weitere Kommunikationseinheit und/oder eine Kommunikationsgarnitur und/oder ein Bedienelement als Zwischenstation passiert, so handelt es sich um eine unmittelbare Verbindung. Somit ist eine Verbindung, die zwei Kommunikationseinheiten direkt miteinander verbindet, eine solch unmittelbare netzwerkübergreifende Verbindung.

Die Erfindung beruht nun auf der Erkenntnis, dass zwei Kommunikationseinheiten über mehrere unterschiedliche Verbindungen oder Verbindungstypen miteinander Audiosignale austauschen können. Zwei der mehreren Verbindungen sind insofern Ersatzverbindungen zu jeweils der anderen Verbindung, als dass ein Audiosignal, das mittels einer der zwei Verbindungen zwischen den Kommunikationseinheiten ausgetauscht wird, ersatzweise auch über eine andere der zwei Verbindungen ausgetauscht werden kann. Die Ersatzverbindung kann beispielsweise erst mit Unterbrechung einer zuvor bestehenden Verbindung zwischen den zwei Netzwerkknoten aufgebaut werden. In anderen Worten, zwei sich gegenseitig ersetzende Verbindungen können beispielsweise nacheinander und/oder nur zeitlich teilweise überlappend bestehen.

Falls die unmittelbare Verbindung unterbrochen wird, so kann auch die hierüber ausgeführte Sprechverbindung unterbrochen und/oder eingeschränkt werden. So kann die Sprechverbindung für die Zeit, in der die unmittelbare Verbindung unterbrochen ist, zumindest insofern eingeschränkt sein, als dass Audiosignale zumindest nicht netzwerkübergreifend übermittelt werden können.

Insofern kann trotz Unterbrechung der unmittelbaren Verbindung vorteilhafterweise noch eine Kommunikation zwischen den Teilnehmern der Sprechverbindung, deren Kommunikationsgarnituren innerhalb eines lokalen Netzwerks verbunden sind, fortgeführt werden.

Einer der beiden Kommunikationseinheit, zwischen denen die unmittelbare Verbindung ausgebildet war, kann diese Unterbrechung erkennen, beispielsweise indem dessen Sende- und/oder Empfangseinheit, insbesondere ein Modul, wie beispielsweise ein Bluetooth- und/oder ein WLAN-Modul, zum Verbinden mit der anderen Kommunikationseinheit eine solche Verbindungsunterbrechung signalisiert. Eine solche Verbindungsunterbrechung kann beispielsweise durch einen Verbindungsabbruch gegeben sein. Eine Verbindungsunterbrechung kann insofern bedeuten, dass die entsprechende Verbindung, beispielsweise im Rahmen eines Timeouts, zeitlich begrenzt oder aber auch vollständig abgebrochen ist.

Die Kommunikationseinheit kann daraufhin eine die Verbindungsunterbrechung betreffende Nachricht, wobei ein solches Vorgehen hierbei beispielsweise gemäß dem Kommunikationsprotokoll vorgegeben ist, an das Hintergrundsystem mit seiner anonymisierten Kennung senden. Die Nachricht kann beispielsweise mittels einer Mobilfunkeinheit, die in der Kommunikationseinheit eingebracht ist, übermittelt werden.

Das Hintergrundsystem kann anhand der Nachricht betreffend die Verbindungsunterbrechung, insbesondere anhand von der in der Nachricht enthaltenen anonymisierten Kennung, die zu der Sprechverbindung in dem Hintergrundsystem anonymisierten Kennungen mit der zugeordneten Verbindungsinformation ermitteln. Das Hintergrundsystem kann beispielsweise die anonymisierte Kennung in der Nachricht verwenden und nach dieser in den hinterlegten Verbindungsinformationen mit den dazugehörigen anonymisierten Kennungen suchen.

Das Hintergrundsystem kann sodann eine Ersatzverbindung zwischen den beiden Kommunikationseinheiten aufbauen. Beispielsweise kann das Hintergrundsystem hierzu einen Verbindungsaufbau mit jeder der beiden Kommunikationseinheiten initialisieren und durchführen. Das Hintergrundsystem kann hierzu eine Verbindungsanfrage, beispielsweise anhand von Netzwerk-IP-Adressen über das Internet und/oder anhand von Mobilfunknummern, an beide Kommunikationseinheiten senden.

Das Hintergrundsystem kann diese Verbindungsanfrage beispielsweise anhand der anonymisierten Kennungen an die betreffende Kommunikationseinheit übertragen. Dabei kann das Hintergrundsystem in der Lage sein die anonymisierte Kennung der erstellenden und/oder nutzenden Kommunikationseinheit zuordnen zu können, so zum Beispiel anhand der Verbindungsinformation und/oder anhand von in dem Hintergrundsystem schon vorab zum Beginn der Sprechverbindung hinterlegten Kontaktinformationen.

Daraus ergibt sich der Vorteil, dass ein gezielter Aufbau der Ersatzverbindung möglich ist, als insofern zum Aufbau der Ersatzverbindung nur die zwei unmittelbar von der Unterbrechung betroffenen Kommunikationseinheiten benachrichtigt werden müssen. Jedoch muss das Hintergrundsystem hierzu in die Lage versetzt werden, die anonymisierten Kennungen einer Netzwerk-IP-Adresse oder Mobilfunknummer jeweils der die anonymisierten Kennungen erstellenden und/oder nutzenden Kommunikationseinheit zuordnen zu können. Daraus ergibt sich der Vorteil, dass ein unberechtigterer Zugriff eines Dritten auf eine oder beide anonymisierten Kennungen alleine keinen Rückschluss darauf zulässt, welche Kommunikationseinheiten an der Sprechverbindung beteiligt sind.

Das Hintergrundsystem kann alternativ oder ergänzend dazu eingerichtet sein, die Verbindungsanfrage zusammen mit den anonymisierten Kennungen über einen Broadcast an Kommunikationseinheiten zu versenden. Die Kommunikationseinheiten empfangen jeweils die Verbindungsanfrage und können beispielsweise durch einen Vergleich mit einer in der Kommunikationseinheit abgespeicherten anonymisierten Kennung erkennen, ob die Verbindungsanfrage an sie gerichtet ist. Falls eine der Kommunikationseinheiten erkennt, dass die Verbindungsanfrage an sie gerichtet ist, kann die Kommunikationseinheit der Verbindunganfrage zustimmen, beispielsweise indem sie eine Rückmeldung an das Hintergrundsystem sendet. Falls zu jeder der in der Verbindungsanfrage versendeten anonymisierten Kennungen sich eine Kommunikationseinheit zurückmeldet, so kann das Hintergrundsystem in Folge dessen die Ersatzverbindung zwischen diesen Kommunikationseinheiten aufbauen. Falls sich zumindest zu einer der in der Verbindungsanfrage versendeten anonymisierten Kennungen keine Kommunikationseinheit zurückmeldet, kann das Hintergrundsystem dazu eingerichtet sein, eine entsprechende Nachricht an zumindest die andere Kommunikationseinheit zu übermitteln. Beispielsweise können die Kommunikationseinheiten die Sprechverbindung in Folge dessen beenden.

Durch das Verwenden einer Broadcast-Anfrage seitens des Hintergrundsystems ergibt sich der Vorteil, dass lediglich die Kommunikationseinheiten selbst in der Lage sein müssen, deren jeweilige anonymisierte Kennungen zu erkennen, damit eine Ersatzverbindung aufgebaut werden kann. Insofern müsste ein Dritter nicht nur die anonymisierten Kennungen zu einer Sprechverbindung abfangen, sondern zudem auch genau auf die internen Speicher der zugehörigen Kommunikationseinheiten zugreifen, um Kenntnis über die an der Sprechverbindung beteiligten Kommunikationseinheiten zu erlangen.

Nachdem die Ersatzverbindung aufgebaut ist, kann die Sprechverbindung hierüber weitergeführt werden. So können die Kommunikationseinheiten im Rahmen der netzwerkübergreifenden Sprechverbindung empfangene Audiosignale über die Ersatzverbindungen an jeweils die andere Kommunikationseinheit weiterleiten.

Dadurch ergibt sich der Vorteil, dass trotz einer Unterbrechung der unmittelbaren Verbindung zwischen zwei Kommunikationseinheiten, die hierüber ausgeführte Sprechverbindung weitergeführt werden kann. Das erfindungsgemäße Verfahren sieht vorteilhafterweise vor, dass lediglich anonymisierte Kennungen und Verbindungsinformationen an das Hintergrundsystem übermittelt werden. Insofern müssen keine persönlichen Daten der Teilnehmer der Sprechverbindung ausgetauscht werden.

Eine weitere erfindungsgemäße Lösung umfasst eine Kommunikationseinheit, die dazu eingerichtet ist, an einem Verfahren gemäß einem der erfindungsgemäßen Verfahrensansprüche teilzunehmen, indem sie eingerichtet ist, die oben beschriebenen, durch eine der Kommunikationseinheiten durchzuführenden Schritte auszuführen.

Zudem umfasst eine weitere erfindungsgemäße Lösung ein Hintergrundsystem, das dazu eingerichtet ist, anonymisierte Kennungen zu erfindungsgemäßen Kommunikationseinheiten mit zugeordneten Verbindungsinformationen zum Aufbau einer über das Hintergrundsystem verlaufenden Ersatzverbindung zu verwalten.

Außerdem umfasst eine weitere erfindungsgemäße Lösung ein Kraftfahrzeug mit einer erfindungsgemäßen Kommunikationseinheit.

Kraftfahrzeuge können beispielsweise Quads, Wasserfahrzeuge, insbesondere Jetskis, oder motorisierte Fahrzeuge, wie insbesondere Gelände-, Land- und forstwirtschaftliche Fahrzeuge (z. B. EU Fahrzeugklassen wie L, M, N, O, T, C....), sein.

Die Erfindung umfasst auch Weiterentwicklungen, durch die sich zusätzliche Vorteile ergeben.

Im Folgenden sind zur Erfindung gehörige Weiterentwicklungen zu dem Verfahren beschrieben. Diese Weiterentwicklungen gelten entsprechend auch für die erfindungsgemäße Kommunikationseinheit, das erfindungsgemäße Hintergrundsystem und das erfindungsgemäße Kraftfahrzeug.

Eine Weiterentwicklung zu dem erfindungsgemäßen Verfahren ergibt sich, indem beim Aufbau der Sprechverbindung zumindest eine der zwei die unmittelbare Verbindung ausbildenden Kommunikationseinheiten ihre anonymisierte Kennung an die andere der zwei die unmittelbare Verbindung ausbildenden Kommunikationseinheiten übermittelt, damit diese andere Kommunikationseinheit die beiden anonymisierten Kennungen in dem Hintergrundsystem mit zugeordneter Verbindungsinformation hinterlegt.

Beispielsweise kann die Kommunikationseinheit mit der Initiierung des Aufbaus der Sprechverbindung ihre anonymisierte Kennung über die unmittelbare Verbindung an die andere Kommunikationseinheit übertragen.

Dadurch wird vorteilhafterweise vermieden, dass Daten betreffend die Sprechverbindung durch wiederholtes Übermitteln fehlerhaft übertragen und/oder von einer unbefugten Person abgegriffen werden können.

Eine Weiterentwicklung ergibt sich, indem sobald eine der zwei die unmittelbare Verbindung ausbildenden Kommunikationseinheiten die Unterbrechung der unmittelbaren Verbindung erkennt, diese Kommunikationseinheit einen diesbezüglichen Hinweis betreffend ein Verbindungsproblem an ein mit ihr verbundenes kraftfahrzeugseitiges Bedieninstrument ausgibt.

In anderen Worten, die die Unterbrechung erkennende Kommunikationseinheit ist mit einem kraftfahrzeugseitigen Bedieninstrument verbunden. Das Bedieninstrument ist dazu eingerichtet, dem Kraftfahrzeugnutzer bei Auftreten der Unterbrechung der unmittelbaren Verbindung einen Hinweis betreffend das diesbezügliche Verbindungsproblem auszugeben.

Das Bedieninstrument kann beispielsweise durch eine Bedienanzeige in dem Kraftfahrzeug gegeben sein. Die Kommunikationseinheit kann über eine Schnittstelle, beispielsweise eine Bluetooth-Schnittstelle, und/oder über eine Kabelverbindung mit dem Bedieninstrument verbunden sein. Das Bedieninstrument kann Kraftfahrzeugdaten, wie beispielsweise Daten zu Kraftfahrzeugparameter, Navigationsdaten, Verkehrsdaten und/oder Wetterdaten, und/oder mit der Kommunikationseinheit austauschen. Kraftfahrzeugparameter können Angaben zu Treibstoff-, Batteriestand und/oder Wartungshinweise des Kraftfahrzeugs sein, um nur einige wenige Beispiele zu nennen. Falls sich zum Beispiel Kraftfahrzeugdaten verändern, wie beispielsweise dessen Kraftfahrzeugparamater, kann das Bedieninstrument eine diesbezügliche Angabe beispielsweise von einer Steuereinheit in dem Kraftfahrzeug übermittelt bekommen. Das Bedieninstrument kann eine solche Angabe verarbeiten und dann an die mit ihr verbundene Kommunikationseinheit weiterleiten. Die Kommunikationseinheit kann die Angabe, beispielsweise durch Nutzung einer Unicast-, Multicast- oder Broadcast-Funktion in dem Kommunikationsprotokoll, an Kraftfahrzeugnutzer, insbesondere an die von der Angabe unmittelbar betroffenen Kraftfahrzeugnutzer, weitergeben.

Dadurch ergibt sich der Vorteil, dass der Kraftfahrzeugnutzer stets über den Zustand von dessen Kraftfahrzeug informiert ist und entsprechend reagieren kann. Der Zustand des Kraftfahrzeugs kann an dem Bedieninstrument angezeigt und/oder über die Kommunikationseinheit an die kraftfahrzeugnutzerseitigen Kommunikationsgarnituren übermittelt und ausgegeben werden. Der Kraftfahrzeugnutzer kann somit dessen Aufmerksamkeit auf das Verkehrsgeschehen richten, bekommt jedoch kraftfahrzeugrelevante Angaben, beispielsweise betreffend die Sprechverbindungen, insbesondere hinsichtlich Verbindungsproblemen, übermittelt.

Eine Weiterentwicklung ergibt sich, indem eine der zwei die unmittelbare Verbindung ausbildenden Kommunikationseinheiten eine nutzerseitige Eingabe über ein mit dieser Kommunikationseinheit verbundenes kraftfahrzeugseitiges Bedieninstrument zur Unterbrechung empfängt und folglich veranlasst, die netzwerkübergreifende Sprechverbindung über die Ersatzverbindung zu wechseln oder weiterzuführen.

Das bedeutet, aufgrund der nutzerseitige Eingabe an dem mit der Kommunikationseinheit verbundenen Bedieninstrument, wird die netzwerkübergreifende Sprechverbindung über die Ersatzverbindung ausgeführt. Durch die Eingabe wird der Kommunikationseinheit insofern mitgeteilt, dass die unmittelbare Verbindung unterbrochen ist, auch wenn dem zum Zeitpunkt der Eingabe nicht so ist, und in Folge dessen das erfindungsgemäße Verfahren auszuführen ist.

Dadurch ergibt sich der Vorteil, dass falls der Kraftfahrzeugnutzer frühzeitig erkennt, dass zeitnah eine Verbindungsunterbrechung eintritt, er manuell vorab die Sprechverbindung auf die Ersatzverbindung umstellen kann, um sicherzustellen, dass die Sprechverbindung durchwegs aufrechterhalten bleibt.

Eine Weiterentwicklung ergibt sich, indem sobald einer der zwei die unmittelbare Verbindung ausbildenden Kommunikationseinheiten die Unterbrechung der unmittelbaren Verbindung erkennt, die Kommunikationseinheit eingehende Audiosignale der Sprechverbindung in einem Audiopuffer zwischenspeichert und nach Weiterführen der netzwerkübergreifenden Sprechverbindung übermittelt.

In anderen Worten, kommt es zu einer Unterbrechung der unmittelbaren Verbindung, so können Audiosignale bis zur Weiterführung der Sprechverbindung in einem Audiopuffer in jeder der Kommunikationseinheiten zwischengespeichert und mit der Weiterführung der Sprechverbindung durch die jeweilige Kommunikationseinheit weitergeleitet werden.

So ein Audiopuffer kann durch einen Speicherbereich in der Kommunikationseinheit gegeben sein. Der Audiopuffer kann beispielsweise als ein zyklischer (Ring-)Puffer gegeben sein, der zur Zwischenspeicherung von Audio-Daten verwendet wird.

Wird während des Ausführens der Sprechverbindung die unmittelbare Verbindung zwischen den zwei Kommunikationseinheiten getrennt, so kann die Sprechverbindung eingeschränkt innerhalb der zwei lokalen Netzwerke weitergeführt werden. Ein Audiosignal wird beispielsweise von einer der Kommunikationsgarnituren, die an der Sprechverbindung teilnehmen, erfasst und zu der unmittelbar mit dieser Kommunikationsgarnitur verbundenen Kommunikationseinheit weitergeleitet. Diese Kommunikationseinheit kann das Audiosignal an die anderen Kommunikationsgarnituren, die an der Sprechverbindung teilnehmen und unmittelbar mit derselben Kommunikationseinheit verbunden sind, weiterleiten, auch wenn die unmittelbare netzwerkübergreifende Verbindung unterbrochen ist. Die Kommunikationseinheit kann alternativ oder ergänzend das Audiosignal, insbesondere wenn es netzwerkübergreifend übermittelt werden müsste, in dessen Audiopuffer speichern. Sobald die Ersatzverbindung aufgebaut ist, kann die Kommunikationseinheit, falls sie bis dahin mehrere solcher Audiosignale in dessen Audiopuffer aufgenommen hat, die Audiosignale in deren Audiopuffer synchronisieren und/oder an die über die Ersatzverbindung an die angeschlossene Kommunikationseinheit übermitteln.

Vorteilhafterweise gehen trotz kurzzeitiger Unterbrechung der netzwerkübergreifenden unmittelbaren Verbindung, sowie der hierüber ausgeführten Sprechverbindung, keine Audiosignale, die im Rahmen der Sprechverbindung ausgetauscht werden, verloren. Audiosignale können nach Aufbau der Ersatzverbindung, insbesondere in deren zeitlich von der jeweiligen Kommunikationseinheit empfangenen Reihenfolge synchronisiert, weitergeleitet werden. Der Ablauf dieses Synchronisationsverfahren kann durch das Kommunikationsprotokoll und/oder als Teil von deren Audiopuffer vorgegeben sein.

Falls beide Kommunikationseinheiten in deren Audiopuffer Audiosignale abgespeichert haben, so können die Kommunikationseinheiten nach Aufbau der Ersatzverbindung das Weiterleiten der Audiosignale in deren Audiopuffer untereinander, beispielsweise gemäß eines solchen Synchronisationsverfahren, abstimmen.

Dies hat den Vorteil, dass die Audiosignale auch netzwerkübergreifend entsprechend deren zeitlich von den Kommunikationseinheiten empfangenen Reihenfolge an die Teilnehmer der Sprechverbindung übermittelt werden können.

Eine Weiterentwicklung ergibt sich, indem die in der Kommunikationseinheit verbaute Mobilfunkeinheit über eine in der Kommunikationseinheit vorliegende Teilnehmeridentitätsmodulkarte mit dem Hintergrundsystem kommuniziert.

Das bedeutet, die Kommunikationseinheit weist eine Teilnehmeridentitätsmodulkarte auf, um mit dem Hintergrundsystem Daten betreffend die Sprechverbindung, insbesondere Audiosignale und/oder anonymisierte Kennungen und/oder Verbindungsinformationen, auszutauschen.

Die Teilnehmeridentitätsmodulkarte kann insbesondere durch ein elektronisches Chip-Modul gegeben sein. Die Teilnehmeridentitätsmodulkarte kann beispielsweise in einen hierfür vorgesehenen Aufnahmebereich in die Kommunikationseinheit eingeführt und/oder eingelegt werden. Die Teilnehmeridentitätsmodulkarte kann eine Identität des die Kommunikationseinheit benutzenden Kraftfahrzeugnutzers speichern. Insbesondere kann Kommunikationseinheit dazu dienen, diesen und/oder die Kommunikationseinheit, in der die Teilnehmeridentitätsmodulkarte vorliegt, zu authentifizieren. Die Teilnehmeridentitätsmodulkarte kann eine SIM-Karte, insbesondere auch eine eSIM, sein. So kann eine Teilnehmeridentitätsmodulkarte insofern vorliegen, als dass die eSIM in der Kommunikationseinheit hinterlegt ist und/oder die Kommunikationseinheit die eSIM nutzt. Hierzu kann die Kommunikationseinheit auch einen Sensor und/oder Bilderfassungsgerät aufweisen, um beispielsweise die eSIM einzulesen, beispielsweise indem die eSIM betreffende Benutzerdaten durch Scannen eines QR-Codes in die Kommunikationseinheit hinterlegt werden.

Dadurch ergibt sich der Vorteil, dass die Kommunikationseinheit über eine solche Mobilfunkeinheit stets das Mobilfunknetz benutzen kann, auch ohne hierzu mit einem Gerät verbunden sein zu müssen. Insofern ist die Kommunikationseinheit auch in der Lage, anderweitige Dienste, wie beispielsweise Verkehrs-, Navigations- und/oder Wetterdienste, zu nutzen. Der Kraftfahrzeugnutzer kann vorteilhafterweise die Teilnehmeridentitätsmodulkarte austauschen und insofern den für sich passenden Mobilfunkanbieter flexibel wechseln.

Eine Weiterentwicklung ergibt sich, indem sich zumindest eines der beiden lokale Netzwerke mit einem mobilfunkfähigen Endgerät verbindet.

Zumindest eine der beiden die lokalen Netzwerke aufspannende Kommunikationseinheiten verbindet sich während des Durchführens der Sprechverbindung und/oder vor deren Aufbau mit einem mobilfunkfähigen Endgerät.

Dadurch ergibt sich der Vorteil, dass eine Kommunikationseinheit nicht zwangsweise selbst eine Mobilfunkeinheit aufweisen muss, sondern ersatzweise auch mit einem mobilfunkfähigen Endgerät eine Verbindung aufbauen kann, um hierüber insbesondere mit dem Hintergrundsystem und anderen Geräten zu kommunizieren.

So können vorteilhafterweise über das mobilfunkfähige Endgerät eingehende Anrufe in eine Sprechverbindung eingebunden werden. Zudem können Umgebungsdaten, wie beispielsweise Wetterdaten und/oder Verkehrsdaten, über das mobilfunkfähige Endgerät empfangen werden, und an die mit dem mobilfunkfähigen Endgerät verbundenen Kommunikationseinheit weitergeleitet werden. Die Kommunikationseinheit kann diese Umgebungsdaten beispielsweise verarbeiten und einem oder mehreren Kraftfahrzeugnutzern jeweils ausgestattet mit einer Kommunikationsgarnitur bereitstellen. Die Kommunikationseinheit kann hierzu beispielsweise die Umgebungsdaten für eine Ausgabe über Kommunikationsgarnituren aufbereiten und als solche an die Kommunikationsgarnituren weiterleiten.

Eine Weiterentwicklung ergibt sich, indem falls die mit einem solchen mobilfunkfähigen Endgerät verbundene Kommunikationseinheit die Unterbrechung der unmittelbaren Verbindung erkennt, dessen anonymisierter Kennung mittels des mobilfunkfähigen Endgeräts an das Hintergrundsystem sendet.

In anderen Worten, die die Unterbrechung erkennende Kommunikationseinheit übermittelt deren anonymisierte Kennung über das mit der Kommunikationseinheit verbundene mobilfunkfähige Endgerät an das Hintergrundsystem, um dem Hintergrund zu anzuzeigen, dass die Ersatzverbindung für die Sprechverbindung aufgebaut werden soll.

Zumindest einer der beiden Kommunikationseinheiten ist mit einem mobilfunkfähigen Endgerät, über welches Daten betreffend die Sprechverbindung, insbesondere Audiosignale und/oder anonymisierte Kennungen und/oder Verbindungsinformationen, an das Hintergrundsystem übermittelt werden können.

Dadurch ergibt sich der Vorteil, dass die Kommunikationseinheit nicht zwangsweise eine Mobilfunkeinheit aufweisen muss, sondern ersatzweise auch mit einem mobilfunkfähigen Endgerät verbunden sein kann, um dem Hintergrundsystem mitzuteilen, dass die Ersatzverbindung aufgebaut werden soll.

Eine Weiterentwicklung ergibt sich, indem, nachdem die Ersatzverbindung zwischen den zwei Kommunikationseinheiten ausgebildet ist, eine dieser beiden Kommunikationseinheiten erkennt, dass die unmittelbare Verbindung erneut bereitsteht, ein Weiterführen der netzwerkübergreifenden Sprechverbindung über die unmittelbare Verbindung initiiert wird, indem ein erneuter Aufbau der unmittelbaren Verbindung erfolgt und die Ersatzverbindung unterbunden wird.

In anderen Worten, die Ersatzverbindung wird nur solange zum Weiterführen der Sprechverbindung genutzt bis die ursprüngliche unmittelbare Verbindung wieder zur Verfügung steht. Sobald die unmittelbare Verbindung wieder verfügbar ist, verbinden sich die Kommunikationseinheiten zunächst miteinander über die unmittelbare Verbindung, leiten sodann Audiosignale betreffend die Sprechverbindung untereinander über die unmittelbare Verbindung fortan weiter und geben eine entsprechende Nachricht an das Hintergrundsystem ab, um die zuvor genutzte Ersatzverbindung zu trennen.

Die Kommunikationseinheiten können mittels in den Kommunikationseinheiten verbauter Module prüfen, welche Verbindungsoptionen zur Verfügung stehen. So können die Kommunikationseinheiten beispielsweise gemäß deren Kommunikationsprotokoll regelmäßig Signale durch deren Module aussenden lassen, um dadurch deren Bereitschaft zum Aufbau einer Verbindung anderen Kommunikationseinheiten zu signalisieren, die wiederum solche Signale empfangen und gemäß dem Kommunikationsprotokoll auswerten können. Die Bereitschaft kann dabei angeben, dass die unmittelbare Verbindung zum Aufbau einer Verbindung bereitsteht.

Stellt eine der an der Sprechverbindung beteiligten Kommunikationseinheiten fest, dass sich die andere Kommunikationseinheit mit dieser unmittelbar verbinden kann, so kann die Kommunikationseinheit einen Verbindungsaufbau der unmittelbaren Verbindung initiieren und die unmittelbare Verbindung aufbauen.

Die Sprechverbindung wird insofern, wenn möglich, stets über die unmittelbare Verbindung geführt. Dadurch werden vorteilhafterweise Daten betreffend die Sprechverbindung, insbesondere Audiosignale und/oder anonymisierte Kennungen und/oder Verbindungsinformationen, nur solange notwendig an ein externes System, wie beispielsweise das Hintergrundsystem, übertragen.

Zum Durchführen der beschriebenen Schritte kann eine Prozessorschaltung bereitgestellt sein, die eine Programmierung oder Software aufweist, die Programminstruktionen umfasst, welche die Prozessorschaltung bei Ausführen der Programminstruktionen dazu veranlasst, von einer der erfindungsgemäßen Kommunikationseinheiten durchzuführenden Schritte des Verfahrens auszuführen. Die Prozessorschaltung kann hierzu zumindest einen Mikroprozessor und/oder Mikrocontroller aufweisen. Die Programminstruktionen können in einem Datenspeicher der Prozessorschaltung gespeichert sein. Die Prozessorschaltung kann insofern zumindest Bestandteil einer erfindungsgemäßen Kommunikationseinheit sein.

Zu der Erfindung gehören auch Weiterbildungen der erfindungsgemäßen zwei Kraftfahrzeuge mit jeweils einer Kommunikationseinheit, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen der erfindungsgemäßen zwei Kraftfahrzeuge mit jeweils einer Kommunikationseinheit hier nicht noch einmal beschrieben.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Die Erfindung umfasst auch die Kombinationen der Merkmale der beschriebenen Ausführungsformen.

Im Folgenden ist ein Ausführungsbeispiel der Erfindung beschrieben. Hierzu zeigt:
- Fig.: zeigt als Ausführungsbeispiel eine Kommunikationseinheit mit einer Mobilfunkeinheit und eine zweite Kommunikationseinheit verbunden mit einem mobilfunkfähigen Endgerät zur Durchführung, insbesondere auch einer Weiterführung, einer Sprechverbindung.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In der Figur sind funktionsgleiche Elemente jeweils mit denselben Bezugszeichen versehen.

Fig. zeigt als Ausführungsbeispiel eine Kommunikationseinheit 12a verbunden 30 mit einem mobilfunkfähigen Endgerät 26 und eine zweite Kommunikationseinheit 12b mit einer Mobilfunkeinheit 32 zur Durchführung, insbesondere auch einer Weiterführung, einer Sprechverbindung.

Die Kommunikationseinheit 12a kann mit Kommunikationsgarnituren 16a zu einem ersten lokalen Netzwerk verbunden 18a sein. Darüber hinaus kann das erste lokale Netzwerk ein erstes Bedieninstrument 24a und ein mobilfunkfähiges Endgerät 26 umfassen, die jeweils mit der Kommunikationseinheit 12a verbunden 28a, 30 sind.

Die zweite Kommunikationseinheit 12b kann mit Kommunikationsgarnituren 16b zu einem zweiten lokalen Netzwerk verbunden 18b sein. Wie in der Figur gezeigt, kann sich das zweite lokale Netzwerk insofern von dem ersten lokalen Netzwerk unterscheiden, als dass die zweite Kommunikationseinheit 12b eine Mobilfunkeinheit 32 aufweist. So kann die zweite Kommunikationseinheit 12b mittels der Mobilfunkeinheit 32 auf ein Mobilfunknetz zugreifen, um zum Beispiel mit einem Hintergrundsystem zu kommunizieren. Hierzu kann die zweite Kommunikationseinheit 12b eine Teilnehmeridentitätsmodulkarte aufweisen, wie beispielsweise eine SIM-Karte und/oder eine eSIM-Karte von einem Mobilfunkanbieter. Außerdem kann die zweite Kommunikationseinheit mit einem zweiten Bedieninstrument 24b verbunden 28b sein.

Das Hintergrundsystem dient dazu, bei Unterbrechung der unmittelbaren Verbindung eine Ersatzverbindung 22 zum Weiterführen der Sprechverbindung aufzubauen. Das Hintergrundsystem 20 kann durch einen Server gegeben sein, der beispielsweise ein Datenbankverwaltungssystem aufweist, um Informationen betreffend die Sprechverbindung, insbesondere von anonymisierten Kennungen der an der Sprechverbindung beteiligten Kommunikationseinheiten 12a, 12b und zugeordneten Verbindungsinformationen zu speichern. Das Hintergrundsystem weist zudem eine Empfangs- und Sendeinheit auf, um mit den beiden Kommunikationseinheiten 12a und 12b jeweils Daten, insbesondere solche Informationen betreffend die Sprechverbindung, auszutauschen.

Die Kommunikationseinheiten 12a, 12b können jeweils Module aufweisen, wie beispielsweise Bluetooth- und/oder WLAN-Module auf, um sich mit weiteren Geräten, insbesondere den Kommunikationsgarnituren 16a, 16b, dem mobilfunkfähigen Endgerät 26, weitere Kommunikationseinheiten 12a,12b und/oder den Bedieninstrumenten 24a,24b zu verbinden. Alternativ oder ergänzend können die Kommunikationseinheiten 12a, 12b Schnittstellen für eine Kabelverbindung aufweisen, die dazu eingerichtet sind, dass solche Geräte unmittelbar an der jeweiligen Kommunikationseinheit 12a, 12b angeschlossen werden können.

Die Bedieninstrumente 24a und 24b können jeweils im Cockpit von unterschiedlichen Kraftfahrzeugen verbaut sein, beispielsweise in deren Kraftfahrzeuganzeige integriert sein. Einer der Kraftfahrzeugnutzer 14a, 14b kann bei Inbetriebnahme von dessen Kraftfahrzeug dessen Kommunikationseinheit 12a, 12b über eine Kabelverbindung an dem Bedieninstrument 24, 24b, beispielsweise über eine Schnittstelle im Cockpit, anschließen. Die Kommunikationseinheiten 12a und 12b können zudem unmittelbar miteinander verbunden 10 sein.

Beispielsweise können die Kommunikationseinheiten 12a und 12b jeweils eine Bedienerschnittstelle aufweisen, damit einer der Kraftfahrzeugnutzer 14a und14b eine Eingabe tätigen kann und/oder Informationen, beispielsweise hinsichtlich potentiellen und/oder bereits bestehenden Verbindungen, angezeigt bekommen kann. Die Kraftfahrzeugnutzer 14a und 14b können zum Beispiel durch Eingabe an einer der Kommunikationseinheiten 12a oder 12b diese mit der jeweils anderen Kommunikationseinheit 12a, 12b oder einem anderen Gerät, wie den Kommunikationsgarnituren 16a, 16b, dem Bedieninstrument 24a, 24b und/oder dem mobilfunkfähigen Endgerät 26, verbinden.

Die Kraftfahrzeugnutzer 14a und 14b können jeweils beispielsweise Fahrer und/oder Beifahrer eines Motorrads und/oder eines Quads sein. Die Kraftfahrzeugnutzer 14a, 14b können über Kommunikationsgarnituren 16a, 16b miteinander kommunizieren. Beispielsweise kann an jeder der Kommunikationseinheiten 12a und 12b ein Audiokanal eingestellt sein, über den die Kraftfahrzeugnutzer 14a und 14b mittels deren Kommunikationsgarnituren 16a und 16b miteinander sprechen können. Eine solche Sprechverbindung kann über Verbindungen innerhalb und zwischen den lokalen Netzwerken ausgeführt werden. Beispielsweise kann eine solche Sprechverbindung zwischen einer der Kommunikationsgarnituren 16a und 16b in dem ersten lokalen Netzwerk.

Um diese Sprechverbindung aufzubauen, kann einer der Kraftfahrzeugnutzer 14a, 14b an einer ihm zur Verfügung stehenden Kommunikationseinheit 12a, 12b eine entsprechende Eingabe tätigen. Eine solche Sprechverbindung kann auf den Kommunikationseinheiten 12a, 12b angezeigt werden, beispielsweise indem den Kommunikationsgarnituren 14a, 14b zugewiesenen Nummern und/oder Namen und/oder Kraftfahrzeugbezeichnungen auf den Kommunikationseinheiten 12a, 12b gruppiert angezeigt werden.

Die Sprechverbindung kann zwischen Kommunikationsgarnituren 14a stattfinden, die auf das erste und zweite lokale Netzwerk aufgeteilt sind. Beim Aufbau einer solchen netzwerkübergreifenden Sprechverbindung können die Kommunikationseinheiten 12a und 12b jeweils deren anonymisierte Kennungen mit einer zugeordneten Verbindungsinformation in einem Hintergrundsystem 20 hinterlegen. Die Kommunikationseinheit 12a kann hierzu beispielsweise dessen anonymisierte Kennung an die andere Kommunikationseinheit 12b übermitteln, welche sodann die anonymisierten Kennungen beider Kommunikationseinheiten 12a und 12b mit der zugeordneten Verbindungsinformation mittels der Mobilfunkeinheit 32 an das Hintergrundsystem 20 übermittelt. Denkbar ist auch, dass die Kommunikationseinheiten 12a die beiden anonymisierten Kennungen mittels dessen mobilfunkfähigen Endgeräts 26 an das Hintergrundsystem 20 übermittelt.

Die Kommunikationseinheiten 12a, 12b können jeweils zu Beginn des Aufbaus der netzwerkübergreifenden Sprechverbindung deren anonymisierte Kennungen, beispielsweise durch Bilden eines Hash-Wertes, erzeugen. Die Kommunikationseinheiten 12a und/oder 12b können zum Beispiel deren anonymisierte Kennung durch Bilden einer Quersumme von deren jeweiliger Seriennummer erstellen. Um nach dem Aufbau der netzwerkübergreifenden Sprechverbindung die eigene Kennung wiederzuerkennen, können die Kommunikationseinheiten 12a und/oder 12b jeweils deren bereitgestellte anonymisierte Kennung in deren jeweiligen internen Speichern aufbewahren und/oder die Kennung, beispielsweise durch erneutes Bilden der Quersumme von dessen Seriennummer, erneut gleichwertig erstellen.

Beispielsweise können die Kommunikationseinheiten 12a und 12b ein Kommunikationsprotokoll benutzen, um ein Betreiben der beiden Kommunikationseinheiten 12a, 12b, insbesondere hinsichtlich des Durchführens von Sprechverbindungen, zu bewerkstelligen.

Während der Sprechverbindung können dessen Teilnehmer, also die Kraftfahrzeugnutzer 14a, 14b deren Kommunikationsgarnituren 16a, 16b in die Sprechverbindung eingebunden sind, über deren jeweilige Kommunikationsgarnituren 16a, 16b Audiosignale an die anderen Teilnehmer der Sprechverbindung übermitteln.

Befinden sich die beiden Kommunikationseinheiten 12a und 12b beispielsweise in jeweils unterschiedlichen Kraftfahrzeugen, so können sich die Kommunikationseinheiten 12a, 12b verkehrsbedingt und/oder aufgrund von unterschiedlichen Routenführungen voneinander zumindest vorübergehend entfernen. Entfernen sich die Kommunikationseinheiten 12a und 12b während des Durchführens der netzwerkübergreifenden Sprechverbindung so weit voneinander, so dass deren Entfernung eine maximale Verbindungsreichweite vorgegeben durch die Technologie, die zur Ausbildung der unmittelbaren Verbindung 10 genutzt wird, übersteigt, so kann dies zur Unterbrechung der unmittelbaren Verbindung 10 und in Folge dessen zur Unterbrechung der netzwerkübergreifenden Sprechverbindung führen. Die Unterbrechung der unmittelbaren Verbindung 10 kann insofern zu einem Verbindungsproblem der netzwerkübergreifenden Sprechverbindung führen.

Sobald eine der Kommunikationseinheiten 12a und 12b die Unterbrechung der unmittelbaren Verbindung 10 erkennt, kann diese Kommunikationseinheit 12a, 12b dessen anonymisierte Kennung an das Hintergrundsystem 20 übermitteln. Zum Beispiel können die Kommunikationseinheiten 12a und 12b hierbei gemäß Vorgaben in dem Kommunikationsprotokoll vorgehen. So kann das Kommunikationsprotokoll vorgeben, welche Inhalte, wie beispielsweise anonymisierte Kennungen, von welchem Gerät, insbesondere den Kommunikationseinheiten 12a, 12b und/oder dem Hintergrundsystem 20, nacheinander gegenseitig ausgetauscht werden müssen, um den Aufbau der Ersatzverbindung 22 zu bewerkstelligen.

Trotz der Unterbrechung der unmittelbaren Verbindung, kann die Sprechverbindung soweit möglich, innerhalb der beiden lokalen Netzwerke fortgeführt werden. Die Kommunikationseinheiten 12a und 12b können jeweils einen Audiopuffer aufweisen, die dazu dienen, empfangene Audiosignale, die aufgrund einer Unterbrechung einer Verbindung, insbesondere der unmittelbaren netzwerkübergreifenden Verbindung 10, nicht weitergeleitet werden können, solange zu speichern, bis die Verbindung, insbesondere die Ersatzverbindung 22, bereitsteht. Das Kommunikationsprotokoll kann ein Synchronisationsverfahren bereitstellen, um sodann die Audiosignale in der zeitlichen Reihenfolge, in der diese von den Kommunikationseinheiten 12a und 12b empfangen wurden, weiterzuleiten. Im Rahmen des Synchronisationsverfahrens können die Kommunikationseinheiten 12a und 12b sich gegenseitig abstimmen, welche Audiosignale, nun nachdem die Ersatzverbindung ausgebildet ist, nacheinander ausgegeben werden sollen. Denkbar ist auch, dass die Kommunikationseinheiten 12a, 12b jeweils Audiosignale mit zugehörigen Zeitstempeln in dem Audiopuffer abspeichern. Der Zeitstempel kann angeben, wann das jeweilige Audiosignal von der entsprechenden Kommunikationseinheit 12a, 12b empfangen wurde. Im Rahmen des Synchronisationsverfahrens kann eine der beiden Kommunikationseinheiten 12a, 12b dessen in dem Audiopuffer gespeicherte Audiosignale mit den zugehörigen Zeitstempeln an die andere Kommunikationseinheit 12a, 12b übermitteln, damit die andere Kommunikationseinheit 12a, 12b diese mit den in dem eigenen Audiopuffer sich befindenden Audiosignalen anhand der zugehörigen Zeitstempel synchronisieren und an die Teilnehmer der Sprechverbindung anschließend weiterleiten kann.

Zudem können die Kommunikationseinheiten 12a und 12b jeweils dazu eingerichtet sein, sobald sie eine solche Unterbrechung erkannt haben, den Kraftfahrzeugnutzern 14a, 14b an den jeweils zugehörigen Bedieninstrument 24a und 24b das Verbindungsproblem anzuzeigen. Denkbar ist auch, dass eine solche Kommunikationseinheit 12a, 12b ein akustisches Signal, wie beispielsweise eine Sprachausgabe, ausgeben kann, um den mit der Kommunikationseinheit 12a, 12b jeweils über deren Kommunikationsgarnituren 16, 16b unmittelbar verbundenen Kraftfahrzeugnutzern 14a, 14b das aufgetretene Verbindungsproblem kenntlich zu machen.

Das Hintergrundsystem 20 kann anhand der empfangenen anonymisierten Kennung suchen, ob in dessen Speicher eine netzwerkübergreifende Sprechverbindung hinterlegt ist, in der eine Kommunikationseinheit, wie beispielsweis hier gezeigt 12a oder 12b, mit einer solchen anonymisierten Kennung eingebunden ist. Das zugehörige Suchergebnis kann die andere anonymisierte Kennung und die Verbindungsinformation, die beim Aufbau der Sprechverbindung in dem Hintergrundsystem 20 hinterlegt wurden, umfassen.

Das Hintergrundsystem 20 kann sodann die beiden anonymisierten Kennungen, also die empfangene und die aus dem Suchergebnis, beispielsweise mittels einer Broadcast-Funktion an alle verfügbaren Kommunikationseinheiten, unter denen sich beispielsweise die dargestellten Kommunikationseinheiten 12a und 12b befinden, senden. Die Kommunikationseinheiten 12a und 12b können jeweils die empfangenen anonymisierten Kennungen mit der eigenen, beispielsweise in deren internen Speicher abgelegten, anonymisierten Kennung vergleichen. Falls diese übereinstimmen, können die Kommunikationseinheit 12a und 12b jeweils eine entsprechende Rückmeldung an das Hintergrundsystem 20 schicken. Nachdem das Hintergrundsystem 20 die Rückmeldung von beiden Kommunikationseinheiten 12a und 12b empfangen hat, initiiert das Hintergrundsystem 20 einen Verbindungsaufbau der Ersatzverbindung 22. Sobald die Ersatzverbindung 22 aufgebaut ist, kann die netzwerkübergreifende Sprechverbindung hierüber weitergeführt werden.

Falls eine der Kommunikationseinheiten 12a oder 12b im Anschluss an das Weiterführen der netzwerkübergreifenden Sprechverbindung feststellt, dass die unmittelbare Verbindung wieder verfügbar ist, so kann beispielsweise diejenige Kommunikationseinheit 12a,12b veranlassen, dass die netzwerkübergreifende Sprechverbindung wieder über die unmittelbare Verbindung 10 ausgeführt wird.

Falls einer der Kraftfahrzeugnutzer 14a, 14b merkt, dass zeitnah ein Verbindungsproblem eintritt, kann derjenige durch eine nutzerseitige Eingabe an einem der Bedieninstrumente 24a, 24b einen solchen Verbindungswechsel initiieren. So kann dieser Kraftfahrzeugnutzer 14a, 14b durch die Eingabe der Kommunikationseinheit 12a, 12b signalisieren, dass eine Unterbrechung der unmittelbaren Verbindung vorliegt, damit die Sprechverbindung von der unmittelbaren Verbindung 10 auf die Ersatzverbindung 22 wechselt.

Im Folgenden ist ein besonders bevorzugtes Ausführungsbeispiel beschrieben:
Aktuell decken drei Arten von Kommunikationseinheiten den Großteil des Marktes ab.
1. Fahrzeuglenker von Motorrädern, Jetskis oder auch Quads verbinden ihre Hörsprechgarnituren (Kommunikationsgarnitur) meist direkt mit ihrem mobilen Telefon (mobilfunkfähiges Endgerät). Dabei besteht eine direkte Verbindung zwischen der Hörsprechgarnitur und dem mobilen Telefon. Es ist keine weitere Einheit beteiligt. In diesem Fall ist es nur möglich maximal eine Hörsprechgarnitur mit dem mobilen Telefon zu verbinden. Die Benutzung von mehreren Hörsprechgarnituren an einem mobilen Telefon wird meist nicht unterstützt.
2. Eine weitere Möglichkeit besteht in der Realisierung einer Funkverbindung mittels Bluetooth/WiFi (WiFi kurz für Wireless Fidelity). Damit können auch mehrere Teilnehmer (kann auch als Kommunikationsteilnehmer bezeichnet werden) eingebunden werden. Geräte, die auf WiFi basieren, sind dabei proprietäre Lösungen.
3. Die dritte Möglichkeit besteht in der Nutzung des CB-Funk (CB kurz für citizens band), diese ist jedoch nicht in den obigen Fahrzeugklassen zu finden, da zum Beispiel die Integration der Sprachtaste schlecht zu realisieren ist.

Folgende Nachteile ergeben sich hierdurch:
1. Bekannte Geräte unterstützen nur eine der oben genannten Funkkommunikationsarten.
2. Telefonie ermöglicht meist nur die eins-zu-eins Verbindung mit einem anderen Teilnehmer.
3. Bluetooth/WiFi Verbindungen zeichnen sich durch eine geringe Reichweite aus (abhängig von Sendeleistung und geographischen Bedingungen).
4. CB-Funk ist ein offener Kanal (keine Privatgespräche möglich).

Widrige geographische Bedingungen und große Abstände zwischen den Teilnehmern einer Gesprächsverbindung. Gleichzeitig geforderte niedrige Kosten für den Benutzer und hohe Zuverlässigkeit.

Die vorliegende Erfindung sieht daher vor eine zentrale Einheit, hier CIB (Connected Infotainment Box) (Kommunikationseinheit) genannt, initiiert eine Verbindung (über Bluetooth Classic/LE Audio oder WiFi) (LE kurz für Low Energy) zu einer weiteren CIB in einem anderen Fahrzeug.

Ergänzend zum standardisierten Verbindungsaufbau wird eine eindeutige Referenz (anonymisierte Kennung) der jeweiligen CIB ausgetauscht. Weitere Verbindungen zu verschiedenen Hörsprechgarnituren (Kommunikationsgarnituren) können über Bluetooth (Classic/LE Audio) realisiert werden. Wird die BT/WiFi Verbindung (BT Bluetooth) zwischen den jeweiligen CIBs getrennt, so wird dies detektiert und eine Verbindung über die interne oder ggf. externe zellulare Einheit (Mobilfunkeinheit) zu einem Hintergrundsystem realisiert. Dieses Hintergrundsystem vermittelt die Kommunikation zwischen den CIBs. Es findet eine automatisierte Übergabe der bestehenden Verbindung, beispielsweise der unmittelbaren Verbindung und/oder hierüber stattfindende Sprechverbindung, statt. Insbesondere kann hierdurch vorteilhafterweise eine Weiterführung einer Sprechverbindung durch eine solch automatisierte Übergabe einhergehen und/oder darauffolgen. Kommen die CIBs wieder in direkte Kommunikationsweite wird die Verbindung wieder automatisch zurück übergeben, also beispielsweise eine unmittelbare Verbindung wiederaufgebaut und die Sprechverbindung von der Ersatzverbindung auf die unmittelbare Verbindung zurück übergeben.

Hierdurch ergeben sich folgende Vorteile:
1. Unabhängig von geographischen Gegebenheiten ist die Realisierung einer kostenoptimierten Kommunikation zwischen verschiedenen Teilnehmern und Fahrzeugen möglich.
2. Speziell bei räumlich getrennten Teilnehmern ist ein weiterführendes GruppenGespräch automatisch über das Hintergrundsystem gewährleistet.
3. Unkomplizierter Verbindungsaufbau.
4. Benutzerführung über eine zentrale Einheit möglich.
5. Verwendung von normalen Standard-Hörsprechgarnituren.

Die Kommunikationseinheit kann mit Kraftfahrzeugen, wie beispielsweise Quads oder kleine motorisierte Fahrzeuge mit geringer Komplexität sowie Gelände-, Land- und Forstwirtschaftliche Fahrzeuge (z. B. EU Fahrzeugklassen wie L, M, N, O, T, C....), genutzt werden.

Die CIB besteht aus mindestens einem Bluetooth Classic Modul und/oder einem Bluetooth Low Energy Modul nach Standard 5.2 oder neuer (optionale Funktion LE Audio) und/oder WiFi unterstützt.

Zuerst wird eine Bluetooth- und/oder WiFi-Verbindung zwischen den verschiedenen CIBs hergestellt. Zur Kommunikation werden die standardisierten Profile genutzt und zusätzlich eine eindeutige Referenz übermittelt. Ebenso wird/werden die Hörsprechgarnitur(en) mit der CIB verbunden. Die CIB wird hierbei als zentraler Knoten benutzt, um die Signale zu konvertieren, zu schalten und zu mischen.

Hinweis: Im Falle einer ungewollten Trennung der direkten Verbindung wird dies detektiert und ein erneuerter Verbindungsaufbau angestoßen. Sollte dieser über das erst genannte Protokoll nicht möglich sein, wird ein Verbindungsaufbau über das Hintergrundsystem angestoßen. Diese datengetriebene Kommunikation ermöglicht auch ein Gruppengespräch.

Weiterhin besteht die Möglichkeit, wenn keine zellulare Einheit im zentralen Knoten (CIB) implementiert ist, die Verbindung mittels eines verbunden mobilen Funkgerätes (Smartphone) (mobilfunkfähigen Endgerät) zu realisieren.

Insgesamt zeigt das Beispiel, wie eine Aufrechterhaltung bestehender Interkommunikation auf motorisierten Fahrzeugen bereitgestellt werden kann.

### Bezugszeichenliste

- 10: Unmittelbare Verbindung
- 12a, 12b: Kommunikationseinheit
- 14a, 14b: Kraftfahrzeugnutzer
- 16a, 16b: Kommunikationsgarnitur
- 18a, 18b: Verbindung zwischen Kommunikationsgarnitur und Kommunikationseinheit
- 20: Hintergrundsystem
- 22: Ersatzverbindung
- 24a, 24b: Bedieninstrument
- 26: mobilfunkfähiges Endgerät
- 28a, 28b: Verbindung zwischen Bedieninstrument und Kommunikationseinheit
- 30: Verbindung zwischen mobilfunkfähigem Endgerät und Kommunikationseinheit
- 32: Mobilfunkeinheit

## Patentansprüche

1. Verfahren zum Weiterführen einer über eine unmittelbare Verbindung (10) zwischen zwei mit einem jeweiligen Kraftfahrzeug verbundenen Kommunikationseinheiten (12a, 12b) ausgeführten Sprechverbindung bei Unterbrechung dieser unmittelbaren Verbindung (10), wobei die zwei Kommunikationseinheiten (12a, 12b) in dem jeweiligen Kraftfahrzeug jeweils mit zumindest einer kraftfahrzeugnutzerzugeordneten Kommunikationsgarnitur (16a, 16b) zu jeweils einem lokalen Netzwerk verbunden sind, und die Sprechverbindung zwischen den Kommunikationsgarnituren (16a, 16b) mittels der Kommunikationseinheiten (12a, 12b) über deren unmittelbare Verbindung netzwerkübergreifend ausgeführt wird, wobei nach Unterbrechung der unmittelbaren Verbindung (10) eine über ein Hintergrundsystem (20) verlaufende netzwerkübergreifende Ersatzverbindung (22) zwischen den zwei lokalen Netzwerken aufgebaut wird, um die Sprechverbindung weiterzuführen, wobei das Verfahren folgende Verfahrensschritte umfasst:
- Hinterlegen von anonymisierten Kennungen zu jeder der zwei Kommunikationseinheiten (12a, 12b) in dem Hintergrundsystem (20) mit zugeordneter Verbindungsinformation;
- Erkennen der Unterbrechung der unmittelbaren Verbindung (10) seitens einer der zwei die unmittelbare Verbindung (10) ausbildenden Kommunikationseinheiten (12a, 12b);
- Aussenden von dessen anonymisierter Kennung durch die die Unterbrechung erkennende Kommunikationseinheit (12a, 12b) an das Hintergrundsystem (20);
- Aufbau der über das Hintergrundsystem (20) verlaufenden netzwerkübergreifenden Ersatzverbindung (22) zwischen den zwei die zuvor unmittelbare Verbindung ausbildenden Kommunikationseinheiten (12a, 12b) anhand der hinterlegten anonymisierten Kennungen und/oder der hinterlegten Verbindungsinformation;
- Weiterführen der netzwerkübergreifenden Sprechverbindung über die netzwerkübergreifende Ersatzverbindung (22).

2. Verfahren nach Anspruch 1, **dadurch gekennzeichnet, dass** beim Aufbau der Sprechverbindung zumindest eines der zwei die unmittelbare Verbindung (10) ausbildenden Kommunikationseinheiten (12a, 12b) dessen anonymisierte Kennung an die andere der zwei die unmittelbare Verbindung (10) ausbildenden Kommunikationseinheiten (12a, 12b) übermittelt, damit diese andere Kommunikationseinheit (12a, 12b) die beiden anonymisierten Kennungen in dem Hintergrundsystem (20) mit zugeordneter Verbindungsinformation hinterlegt.

3. Verfahren nach einem der vorhergehenden Ansprüche, **dadurch gekennzeichnet, dass** sobald einer der zwei die unmittelbare Verbindung (10) ausbildenden Kommunikationseinheiten (12a, 12b) die Unterbrechung der unmittelbaren Verbindung (10) erkennt, diese Kommunikationseinheit (12a, 12b) einen diesbezüglichen Hinweis betreffend ein Verbindungsproblem an ein mit sich verbundenem kraftfahrzeugseitigem Bedieninstrument (24a, 24b) ausgibt.

4. Verfahren nach einem der vorhergehenden Ansprüche, **dadurch gekennzeichnet, dass** eine der zwei die unmittelbare Verbindung (10) ausbildenden Kommunikationseinheiten (12a, 12b) eine nutzerseitige Eingabe über ein mit dieser Kommunikationseinheit (12a, 12b) verbundenes kraftfahrzeugseitiges Bedieninstrument (24a, 24b) zur Unterbrechung empfängt und folglich veranlasst, die netzwerkübergreifende Sprechverbindung über die Ersatzverbindung (22) weiterzuführen.

5. Verfahren nach einem der vorhergehenden Ansprüche, **dadurch gekennzeichnet, dass** sobald einer der zwei die unmittelbare Verbindung (10) ausbildenden Kommunikationseinheiten (12a, 12b) die Unterbrechung der unmittelbaren Verbindung (10) erkennt, die Kommunikationseinheit (12a, 12b) eingehende Audiosignale der Sprechverbindung in einem Audiopuffer zwischenspeichert und nach Weiterführen der netzwerkübergreifenden Sprechverbindung übermittelt.

6. Verfahren nach einem der vorhergehenden Ansprüche, **dadurch gekennzeichnet, dass** die in der Kommunikationseinheit (12a, 12b) verbaute Mobilfunkeinheit (32) über eine in der Kommunikationseinheit (12a, 12b) vorliegenden Teilnehmeridentitätsmodulkarte mit dem Hintergrundsystem (20) kommuniziert.

7. Verfahren nach einem der vorhergehenden Ansprüche, **dadurch gekennzeichnet, dass** sich zumindest eines der beiden lokale Netzwerke mit einem mobilfunkfähigen Endgerät (26) verbindet.

8. Verfahren nach Anspruch 7, **dadurch gekennzeichnet, dass** falls die mit einem solchen mobilfunkfähigen Endgerät (26) verbundene Kommunikationseinheit (12a, 12b) die Unterbrechung der unmittelbaren Verbindung (10) erkennt, dessen anonymisierter Kennung mittels dem mobilfunkfähige Endgerät (26) an das Hintergrundsystem (20) sendet.

9. Verfahren nach einem der vorhergehenden Ansprüche, **dadurch gekennzeichnet, dass** nachdem die Ersatzverbindung (22) zwischen den zwei Kommunikationseinheiten (12a, 12b) ausgebildet ist, einer dieser beiden Kommunikationseinheiten (12a, 12b) erkennt, dass die unmittelbare Verbindung (10) erneut bereitsteht, ein Weiterführen der netzwerkübergreifenden Sprechverbindung über die unmittelbare Verbindung (10) initiiert wird, indem ein erneuter Aufbau der unmittelbaren Verbindung (10) erfolgt und die Ersatzverbindung (22) unterbunden wird.

10. Kommunikationseinheit dazu eingerichtet, an einem Verfahren gemäß einem der Verfahrensansprüche 1 bis 9 teilzunehmen, indem sie eingerichtet ist, die oben beschriebenen, durch eine der Kommunikationseinheiten durchzuführenden Schritte auszuführen.

11. Hintergrundsystem, das dazu eingerichtet ist, anonymisierte Kennungen von Kommunikationseinheiten jeweils gemäß Anspruch 10 mit zugeordneten Verbindungsinformationen zum Aufbau einer über das Hintergrundsystem verlaufenden Ersatzverbindung zu verwalten.

12. Kraftfahrzeug mit einer Kommunikationseinheit gemäß Anspruch 10.
